# DEMANDE DE BREVET EUROPEEN

(11) **EP 3 799 362 A1**
(43) Date de publication de la demande: **31.03.2021**
(21) Numéro de dépôt: 20192198.8
(22) Date de dépôt: 21.08.2020
(51) Int. Cl.: H04L 12/28, H02J 3/14, G06Q 50/06

(54) **PROCÉDÉ DE PILOTAGE D'ÉQUIPEMENTS ÉLECTRIQUES**

(30) Priorité: 26.09.2019 FR 1910655
(71) Demandeur: Electricité de France, 75008 Paris (FR)
(72) Inventeur: OUSS, Etienne, 77250 MORET-LOING-ET-ORVANNE (FR); BERNASCONI, Stéphane, 77810 THOMERY (FR); GASTIGER, Frédéric, 77210 AVON (FR); GACHOT, Clément, 77300 FONTAINEBLEAU (FR); PRETOT, Charlie, 25870 DEVECEY (FR)
(74) Mandataire: Plasseraud IP

(57) **Abrégé**

Un procédé de pilotage d'une pluralité d'équipements d'une installation électrique, le procédé comprenant une optimisation de valeurs de variables ajustables respectivement associées à un équipement et permettant d'ajuster une consommation électrique dudit équipement en fonction du temps.

L'optimisation est mise en œuvre par un circuit de traitement maître sur la base d'une évaluation des contributions respectives de chaque équipement aux valeurs d'une pluralité de critères de performance.

La pluralité d'équipements est pilotée par l'émission de consignes d'ajustement des valeurs des variables ajustables sur la base de l'optimisation mise en œuvre.

## Description

### Domaine technique

La présente divulgation relève des domaines techniques de la gestion de l'habitat, du bâtiment et de l'énergie.

Plus précisément, la présente divulgation porte sur des procédés de pilotage d'une pluralité d'équipements d'une installation électrique par un circuit de traitement maître, sur des circuits de traitement maîtres configurés pour la mise en œuvre de tels procédés, sur des installations électriques comprenant de tels circuits de traitement maîtres, sur des programmes informatiques pour la mise en œuvre de tels procédés, et sur des supports de stockage de données pour la mise en œuvre de tels procédés.

### Technique antérieure

Dans le monde de la domotique comme de la gestion des bâtiments en général, de nombreux objets connectés (chauffage, voiture, électroménager, volets, etc.) sont proposés sur le marché. Leur intelligence vise à rendre efficace certains aspects de leur fonctionnement.

Mais ces objets demeurent indépendants et la juxtaposition de leurs action n'est pas concertée, si bien qu'on constate généralement un pilotage sub-optimal de l'ensemble, voire contre-productif.

Il existe des gestionnaires d'énergie capables de coordonner certains usages consommateurs d'énergie. Ces produits sont toutefois conçus pour un ensemble prédéfini d'objets. De la même manière, les systèmes de surveillance les plus complets coordonnent l'effet de plusieurs objets : détecteurs, caméras, alarmes pour assurer la sécurité des biens. On trouve encore des gestionnaires d'autoconsommation qui aident un producteur d'énergie renouvelable à consommer sa propre production électrique.

Les solutions existantes ont des défauts récurrents :
- elles ne poursuivent qu'un seul objectif à la fois : économies d'énergie ou sécurité ou autoconsommation etc...
- elles ne sont pas évolutives, chaque système étant conçu pour gérer un ensemble prédéfini d'objets et n'étant pas capable d'intégrer un nouvel arrivant dans sa gestion.

### Résumé

La présente divulgation vise à améliorer la situation.

Il est proposé un procédé de pilotage d'une pluralité d'équipements d'une installation électrique par un circuit de traitement maître, le procédé comprenant :
- une obtention, par le circuit de traitement maître, d'une pluralité de critères de performance,
   ∘ au moins un premier critère de performance ayant une valeur corrélée à une projection d'un coût lié à une consommation ultérieure par l'installation électrique d'électricité fournie,
   ∘ au moins un deuxième critère de performance ayant une valeur corrélée à une projection de satisfaction d'un besoin par un fonctionnement ultérieur d'au moins un équipement de l'installation électrique,
- une obtention, par le circuit de traitement maître, pour chaque équipement, d'au moins une variable ajustable associée audit équipement permettant d'ajuster une consommation électrique dudit équipement en fonction du temps;
- une obtention, par le circuit de traitement maître, pour chaque équipement, d'une évaluation d'une contribution respective dudit équipement aux valeurs de la pluralité de critères de performance en fonction d'une valeur au cours du temps de ladite variable ajustable associée audit équipement,
- une obtention, par le circuit de traitement maître, d'un ensemble optimisé de valeurs desdites variables ajustables en fonction du temps sur la base de l'évaluation des contributions respectives de chaque équipement aux valeurs de la pluralité de critères de performance,
- et un pilotage, par le circuit de traitement maître, de ladite pluralité d'équipements par une émission au cours du temps de consignes d'ajustement des valeurs desdites variables ajustables associées auxdits équipements sur la base dudit ensemble optimisé de valeurs desdites variables ajustables en fonction du temps.

Chaque critère de performance désigne une grandeur à optimiser.

Par exemple, l'installation électrique peut être une installation domestique et la pluralité d'équipements peut comprendre :
- un chauffe-eau pouvant assurer, en tant que « besoin », une disponibilité en eau chaude,
- un lave-linge pouvant assurer, en tant que « besoin », un lavage du linge,
- et un panneau solaire produisant de l'énergie électrique en fonction de l'ensoleillement.

Le chauffe-eau, le lave-linge et le chargeur peuvent consommer de l'énergie électrique qui peut être issue du panneau solaire et/ou fournie par exemple par un fournisseur d'électricité selon une grille tarifaire variable par plages horaires.

Dans cet exemple, il est possible de considérer :
- en tant que « premier critère de performance » : le coût en énergie électrique fournie par le fournisseur d'énergie,
- en tant que « deuxième critère de performance », la satisfaction de l'un des besoins précités, par exemple la disponibilité en eau chaude,
- et en tant que « critère de performance » supplémentaire, la consommation électrique totale, le taux d'autoconsommation et/ou la puissance électrique maximale.

Chaque critère de performance est associé à une valeur. Par exemple la consommation électrique est associée à une valeur de consommation électrique en kWh. La disponibilité d'eau chaude est par exemple associée à une valeur de volume d'eau chaude en litres et/ou à une valeur de température et/ou à une valeur correspondant à une information binaire selon que l'eau chaude est disponible ou non.

Chaque équipement est associé à au moins une variable ajustable en fonction du temps, par exemple une puissance électrique reçue, dont la valeur en fonction du temps contribue aux différents critères de performance.

Dans le cas d'une commande qui évolue au fil du temps, par exemple la puissance électrique reçue par un chauffe-eau, un planning, c'est-à-dire un vecteur de commandes, peut constituer un exemple de variable ajustable en fonction du temps.

Un équipement peut être associé à plusieurs variables ajustables. A titre d'exemple de variables ajustables en fonction du temps, il peut être prévu pour un lave-linge de sélectionner un programme parmi une liste de programmes prédéfinis et de définir une heure de démarrage pour ce programme.

Ainsi, il peut être prévu que la puissance électrique reçue par le chauffe-eau soit répartie :
- tout au long de la journée de manière à assurer une disponibilité permanente d'eau chaude,
- et de manière non uniforme, préférentiellement aux heures où l'ensoleillement est le plus important ainsi qu'aux heures creuses pour limiter le coût en énergie électrique fournie par le fournisseur d'énergie.

Il peut en outre être prévu de piloter de manière synchronisée le fonctionnement du lave-linge et du chauffe-eau, de sorte que le lave-linge soit en fonctionnement seulement lorsque le chauffe-eau ne chauffe pas, ou lorsque le chauffe-eau chauffe à une puissance modérée, de manière à minimiser la puissance électrique requise pour le fonctionnement simultané des équipements de l'installation électrique.

Ainsi, de manière générale, plusieurs critères de performance sont pris en compte conjointement. Ainsi, le pilotage des équipements électriques de l'installation est réalisé de manière concertée en optimisant à la fois la consommation électrique des équipements dans le temps et la satisfaction d'un ou plusieurs besoins par le fonctionnement des équipements.

Si l'installation électrique est modifiée par ajout d'un équipement électrique, la contribution de l'équipement ajouté aux valeurs de la pluralité de critères de performance est évaluée, un nouvel ensemble optimisé de valeurs des variables ajustables de chaque équipement est obtenu et le pilotage de l'ensemble des équipements est ajusté en conséquence.

En reprenant l'exemple de l'installation domestique précitée, si le chauffe-eau est remplacé par un nouveau chauffe-eau ayant une meilleure efficacité énergétique, alors pour satisfaire le besoin de disponibilité en eau chaude dans cette nouvelle configuration de l'installation électrique, la consommation d'énergie électrique requise par le nouveau chauffe-eau est réduite. Ainsi, la contribution du nouveau chauffe-eau aux critères de performance est différente. Sur la base de l'évaluation de cette contribution, il est possible de réaliser une optimisation conjointe du pilotage du nouveau chauffe-eau et du lave-linge dans la nouvelle configuration de l'installation électrique.

Ainsi, de manière générale, grâce à l'évaluation des contributions respectives de chaque équipement aux valeurs de la pluralité de critères de performance, le pilotage des équipements électriques de l'installation est intelligent et reconfigurable. De plus, le procédé de pilotage est générique et polyvalent car l'installation électrique peut comprendre des équipements électriques pilotables de toutes natures, satisfaisant par leur fonctionnement des besoins également de toutes natures.

Dans une réalisation, la valeur dudit deuxième critère de performance est corrélée à une projection de satisfaction d'un premier besoin par un fonctionnement ultérieur d'au moins un équipement de l'installation électrique et ladite pluralité de critères de performance comprend en outre au moins un troisième critère de performance ayant une valeur corrélée à une projection de satisfaction d'un deuxième besoin distinct du premier besoin par un fonctionnement ultérieur d'au moins un équipement de l'installation électrique.

En reprenant l'exemple de l'installation domestique précitée, si un chargeur de batterie pour voiture électrique est intégré dans l'installation en tant que nouvel « équipement » assurant en tant que « besoin » un chargement d'une batterie, alors un critère de performance peut concerner le taux de charge de la batterie. Par exemple, il peut être prévu en tant que « troisième critère de performance » que le taux de charge d'une batterie raccordée au chargeur de batterie pendant un intervalle de temps prédéfini atteigne une valeur supérieure à un seuil prédéfini à la fin de l'intervalle de temps prédéfini.

Le fonctionnement du chargeur de batterie en fonction du temps contribue également à l'ensemble des critères de performance liés à la consommation électrique de l'installation. Ainsi, sur la base des contributions du chargeur de batterie, du chauffe-eau électrique, du lave-linge et du panneau solaire, il est possible de piloter conjointement ces équipements de manière à optimiser l'ensemble des critères de performance, y compris assurer une charge suffisante de la batterie à l'issue d'un intervalle de temps prédéfini.

Dans une réalisation, au moins un équipement étant piloté par un circuit de traitement esclave, le procédé comprend en outre :
- une émission, par le circuit de traitement maître, d'une requête de variable ajustable destinée audit circuit de traitement esclave en vue de l'obtention, par le circuit de traitement maître, pour ledit équipement piloté par ledit circuit de traitement esclave, de ladite au moins une variable ajustable associée audit équipement permettant d'ajuster la consommation électrique dudit équipement en fonction du temps;
- et une émission, par le circuit de traitement maître, d'une requête de contribution respective destinée à chaque circuit de traitement esclave en vue de l'obtention, par le circuit de traitement maître, pour ledit équipement piloté par ledit circuit de traitement esclave, de l'évaluation de la contribution respective dudit équipement aux valeurs de la pluralité de critères de performance en fonction de la valeur au cours du temps de ladite au moins une variable ajustable associée audit équipement.

Ainsi, le circuit de traitement maître dispose de manière centralisée :
- des différentes variables ajustables, l'ajustement de ces variables permettant un pilotage des équipements directement par le circuit de traitement maître ou indirectement par un circuit de traitement esclave préexistant,
- et de l'impact d'un tel ajustement sur les contributions respectives de chaque équipement sur les différents critères de performance.

Typiquement, l'évaluation de la contribution de chaque équipement à la valeur du premier critère de performance peut résulter d'une prévision, ou projection, d'un coût lié à une consommation ultérieure par chaque équipement d'électricité fournie.

Typiquement, l'évaluation de la contribution de chaque équipement à la valeur du deuxième critère de performance peut résulter d'une prévision, ou projection, de satisfaction d'un besoin par le fonctionnement ultérieur de chaque équipement de l'installation électrique.

De manière générale, l'évaluation de la contribution de chaque équipement aux valeurs de la pluralité de critères de performance peut se faire à l'aide de différentes prévisions, par exemple de besoin, de consommation, etc.

Il en est de même pour la synthèse des contributions de tous les équipements : le circuit de traitement maître peut utiliser des prévisions (de consommation électrique par exemple) pour évaluer les performances de l'ensemble.

Les prévisions peuvent être réalisées à partir de données historiques des comportements passés : besoins, consommations, commandes, etc. ou par un autre moyen.

Dans une réalisation, l'évaluation de la contribution d'au moins un équipement à une valeur d'au moins un critère de performance en fonction d'une valeur au cours du temps de ladite au moins une variable ajustable est obtenue sur la base d'une valeur précédente du critère de performance associée à un pilotage identique ou similaire d'un équipement par le passé.

Dans un mode d'une telle réalisation, ledit circuit de traitement esclave est intégré audit équipement.

Alternativement, ledit circuit de traitement esclave est délocalisé. Par exemple l'équipement est en communication avec un circuit de traitement esclave distant via un réseau de communication local ou étendu.

De manière générale, la communication entre circuit de traitement maître et circuits de traitement esclaves s'inscrit dans un contexte où les équipements domestiques et industriels sont de plus en plus intelligents, certains étant notamment aptes à assurer leur propre pilotage automatique. L'obtention d'un ensemble optimisé de valeurs des variables ajustables sur la base des contributions respectives des équipements de l'installation aux critères de performance permet un pilotage standardisé de tous les équipements de l'installation, que ceux-ci soient aptes à assurer leur propre pilotage automatique ou non.

Dans une réalisation,
- au moins un circuit de traitement esclave pilotant un équipement est configuré pour régler au cours du temps la valeur de ladite au moins une variable ajustable associée audit équipement selon une consigne de réglage prédéfinie ;
- et au moins une consigne d'ajustement émise par le circuit de traitement maître est destinée audit circuit de traitement esclave pour ajuster la consigne de réglage prédéfinie.

Par exemple, un chauffe-eau électrique peut comprendre un programmateur, en tant que « circuit de traitement esclave » apte à commander un contacteur jour-nuit sur la base d'une information horaire. Dans cet exemple, il peut être prévu que le circuit de traitement maître leurre le circuit de traitement esclave en ajustant la valeur de l'information horaire, en tant que « consigne de réglage » pour piloter le fonctionnement du chauffe-eau électrique de manière optimisée.

Dans une réalisation, au moins un critère de performance a une valeur associée à une première fonction de coût associée à un premier poids et ladite valeur associée à une première fonction de coût est en outre associée à une deuxième fonction de coût associée à un deuxième poids inférieur au premier poids.

Dans une réalisation, l'installation électrique comprenant en outre un module de production et/ou de stockage électrique apte à fournir une électricité produite et/ou stockée à la pluralité d'équipements de l'installation électrique, le procédé comprend en outre
- une obtention d'un profil de disponibilité de l'électricité produite et/ou stockée pouvant être fournie à l'installation électrique par le module de production ou de stockage électrique en fonction du temps,
- et au moins un critère de performance ayant une valeur corrélée en outre audit profil de disponibilité.

Par exemple, le module de production et/ou de stockage électrique comprend un panneau solaire, le profil de disponibilité est un profil d'ensoleillement en fonction du temps et ledit au moins un critère de performance est un taux d'autoconsommation de l'énergie électrique produite par le panneau solaire en fonction du temps par les équipements électriques de l'installation.

Par exemple :
- le module de production et/ou de stockage électrique comprend une batterie de stockage,
- le profil de disponibilité est un profil de taux de charge de la batterie de stockage en fonction du temps,
- et ledit au moins un critère de performance est corrélé au taux de charge de la batterie de stockage en ce que la batterie est idéalement disponible en permanence pour stocker et/ou fournir de l'énergie électrique en fonction des besoins en énergie électrique des équipements de l'installation.

Par exemple, si le module de production électrique comprend un panneau solaire et que le profil d'ensoleillement prévoit un fort ensoleillement pendant une période prédéfinie, alors il est possible que le panneau solaire fournisse un surplus d'énergie électrique pendant cette période prédéfinie. Il peut ainsi être prévu que la batterie de stockage soit pilotée de manière à ce qu'au début de cette période prédéfinie, le taux de charge de la batterie soit suffisamment faible pour que la batterie soit en mesure de stocker le surplus d'énergie.

Dans une réalisation, le procédé comprend en outre une optimisation par le circuit de traitement maître des valeurs desdites variables ajustables en fonction du temps en vue d'obtenir l'ensemble optimisé de valeurs.

L'optimisation peut être mise en œuvre par tous moyens, par exemple :
- par détermination d'une solution exacte ou approchée à un système d'équations, la solution ainsi déterminée formant l'ensemble optimisé de valeurs,
- par recherche d'une solution approchée par itérations successives, telle que de manière heuristique.

En particulier il est possible de mettre en œuvre l'optimisation selon un algorithme génétique.

L'optimisation peut comprendre une sélection d'un ensemble de profils optimisé parmi une pluralité de n ensembles (A₁, ..., Aᵢ, ..., Aₙ) de profils comprenant chacun au moins une valeur particulière de chaque variable ajustable en fonction du temps.

Par exemple, pour le pilotage d'un lave-linge, lorsque la variable ajustable associée au lave-linge est une heure de démarrage d'un cycle de lavage, chaque ensemble de profils peut comprendre une valeur particulière de cette heure de démarrage.

L'optimisation peut comprendre une sélection d'un ensemble de profils optimisé parmi une pluralité de n ensembles (A₁, ..., Aᵢ, ..., Aₙ) de profils comprenant chacun un profil de valeur de chaque variable ajustable en fonction du temps.

En d'autres termes, l'ensemble de profils optimisé est sélectionné parmi un ensemble de candidats de solution du problème d'optimisation.

Un «profil de valeur» d'une variable ajustable en fonction du temps désigne l'évolution de la valeur particulière que prend ladite variable ajustable au cours du temps.

Par exemple, pour le pilotage d'une batterie de stockage, il est intéressant de pouvoir définir un planning permettant, dans un intervalle de temps prédéfini de l'ordre de la journée, l'activation de la mise en charge de la batterie et/ou l'utilisation de la batterie comme source d'électricité à plusieurs reprises.

Une même variable ajustable peut être conçue de manière à pouvoir définir à la fois la mise en charge de la batterie (par exemple lorsque la variable ajustable prend une valeur égale à 1), l'utilisation de la batterie comme source d'électricité (par exemple lorsque la variable ajustable prend une valeur égale à -1), et la mise hors tension de la batterie de manière à ce que son taux de charge n'évolue pas (par exemple lorsque la variable ajustable prend une valeur égale à 0)

Dans ce but, il est intéressant que chaque ensemble de profils comprenne, pour une série d'instants prédéfinis d'une période de temps à venir (par exemple chaque minute, ou toutes les 5 minutes, d'une période de 24h à venir), une valeur associée de la variable ajustable (dans l'exemple précité : -1, 0, ou 1).

Par exemple, les ensembles de profils peuvent résulter d'optimisations précédentes pour une configuration particulière de l'installation électrique ou résulter d'optimisations précédemment menées pour une ou plusieurs installations électriques similaires. L'optimisation desdites variables ajustables en fonction du temps peut également servir à alimenter une méthode d'apprentissage pour une optimisation ultérieure du pilotage des équipements de la même installation électrique ou d'une autre installation similaire.

Dans un mode d'une telle réalisation, chaque critère de performance obtenu a respectivement une valeur associée à une fonction de coût, les fonctions de coût étant en outre respectivement associées à un poids différent de zéro de manière à former une fonction de coût globale pondérée et l'optimisation, par le circuit de traitement maître, des valeurs desdites variables ajustables en fonction du temps est en outre mise en œuvre sur la base de la fonction de coût globale pondérée.

Par exemple, les critères de performance peuvent être obtenus par le circuit de traitement maître directement sous la forme de la fonction de coût globale pondérée.

Alternativement, par exemple, chaque critère de performance peut être obtenu et associé par le circuit de traitement maître à une fonction de coût et à un poids non nul, formant ainsi la fonction de coût globale pondérée.

Ainsi, une seule fonction de coût globale pondérée permet de déterminer un compromis entre les différents critères de performance en vue d'une optimisation du pilotage des équipements de l'installation.

Il est de plus possible de réévaluer l'importance relative des différents critères de performance simplement en modifiant les poids associés à chaque fonction de coût.

Par ailleurs, si par exemple en raison d'un changement de configuration de l'installation électrique un critère de performance devient obsolète car aucun équipement pilotable n'est en mesure d'en affecter la valeur, il est possible de fixer un poids nul à la fonction de coût associée à ce critère de performance afin de ne pas en tenir compte pour la détermination de la fonction de coût globale.

Dans un mode d'une telle réalisation, ladite sélection comprend une obtention de la pluralité de n ensembles (A₁, ..., Aᵢ, ..., Aₙ) de profils, et comprend en outre, pour chaque ensemble (A₁, ..., Aᵢ, ..., Aₙ) de profils, une répétition de :
- une détermination des valeurs des critères de performance associés audit ensemble de profils lorsque chaque variable ajustable a une valeur en fonction du temps égale audit profil de valeur,
- une détermination d'une valeur d'optimisation (C₁, ..., Cᵢ, ..., Cₙ) associée audit ensemble de profils, la valeur d'optimisation correspondant à un résultat de la fonction de coût globale appliquée auxdites valeurs des critères de performance,
- et une sélection d'un ensemble de profils optimisé sur la base desdits ensembles de profils et des valeurs d'optimisation associées auxdits ensembles de profils.

Ainsi, la détermination d'une valeur d'optimisation associé à chaque ensemble de profils permet de comparer à la fois :
- chaque ensemble de profils par rapport à au moins une valeur de référence afin de déterminer si un ensemble de profils est suffisamment optimisé par rapport à une exigence de satisfaction conjointe des différents critères de performance,
- et/ou les ensembles de profils entre eux pour déterminer l'ensemble de profils le plus optimisé au sein de la pluralité d'ensembles de profils par rapport à une exigence de satisfaction conjointe des différents critères de performance.

Dans un mode d'une telle réalisation, ladite sélection comprend en outre :
- une séparation de la pluralité d'ensembles (A₁, ..., Aᵢ, ..., Aₙ) de profils sur la base des valeurs d'optimisation (C₁, ..., Cᵢ, ..., Cₙ) en une première pluralité de p ensembles et une deuxième pluralité de n-p ensembles, de sorte que la valeur d'optimisation Cᵢ associée à tout ensemble de la première pluralité est inférieure à la valeur d'optimisation Cᵢ associée à tout ensemble de la deuxième pluralité ;
- une génération d'une pluralité d'ensembles fils comprenant chacun un profil de valeur de chaque variable ajustable en fonction du temps sélectionné parmi les profils de valeur de la première pluralité;
- et une mise à jour de la pluralité d'ensembles de profils par remplacement de la deuxième pluralité de n-p ensembles par la pluralité d'ensembles fils.

Par exemple, il est possible de fournir à un circuit maître une pluralité d'ensembles de profils prédéfinie, comprenant un nombre restreint d'ensembles de profils tout en étant générique, couvrant un maximum de configurations possibles d'installations électriques.

Ces ensembles de profils peuvent être classés en termes de taux de satisfaction des différents critères de performance. Plus précisément, ces ensembles peuvent être classés par rapport au résultat attendu du pilotage de fonctionnement des équipements électriques de l'installation vis-à-vis de la fonction de coût globale rendant compte d'une priorité relative des différents critères de performance entre eux.

Selon le principe d'un algorithme dit «génétique », il est intéressant de combiner entre eux les profils de valeur des différentes valeurs ajustables de plusieurs ensembles de profils proches d'un pilotage optimal des équipements de l'installation électrique afin de déterminer une meilleure sélection de profil. Il est possible d'introduire successivement ensuite des profils d'une base de données de profils (par exemple des profils choisis aléatoirement). Ainsi, des profils nouveaux sont générés à chaque itération, ce qui permet d'éviter la « dérive génétique », c'est-à-dire d'éviter que les valeurs des variables soient toujours les mêmes.

Ainsi, il est possible de générer de nouveaux ensembles de profils tous plus proches d'un pilotage optimal. Plusieurs itérations successives d'un tel processus peuvent être mises en œuvre jusqu'à aboutir à un ensemble de profil optimisé pour le pilotage des équipements de l'installation électrique considérée.

Un autre aspect de l'invention porte sur un circuit de traitement maître comprenant un processeur connecté à une mémoire et à au moins une interface de communication avec une pluralité d'équipements d'une installation électrique, le circuit de traitement étant configuré pour réaliser les étapes d'un procédé de pilotage tel que décrit ci-avant.

Dans une réalisation, l'interface de communication est configurée pour communiquer avec au moins un circuit de traitement esclave pilotant un équipement de l'installation électrique.

Un autre aspect de l'invention porte sur une installation électrique comportant une pluralité d'équipements et un circuit de traitement tel que décrit ci-avant.

Un autre aspect de l'invention porte sur un programme informatique comportant des instructions pour la mise en œuvre du procédé de pilotage tel que décrit ci-avant, lorsque lesdites instructions sont exécutées par un processeur d'un circuit de traitement.

Un autre aspect de l'invention porte sur un support non-transitoire de stockage de données, lisible par ordinateur, comprenant au moins une séquence d'instructions amenant un ordinateur à exécuter un programme exécutant les étapes d'un procédé de pilotage tel que décrit ci-avant.

### Brève description des dessins

D'autres caractéristiques, détails et avantages apparaîtront à la lecture de la description détaillée ci-après, et à l'analyse des dessins annexés, sur lesquels :
**Fig. 1**

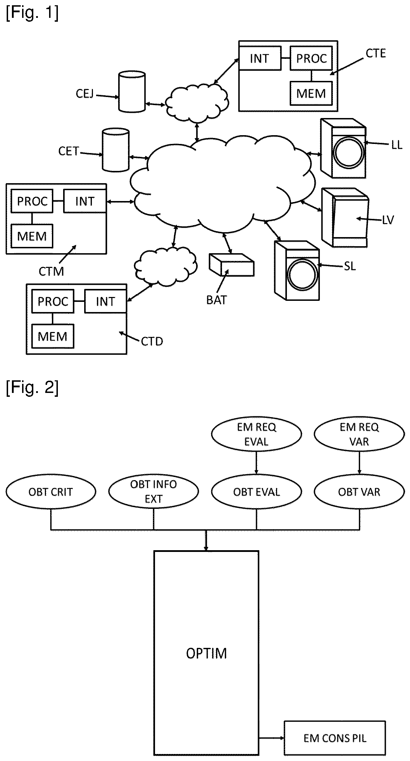

   [Fig. 1] illustre une installation électrique comportant une pluralité d'équipements et un circuit de traitement maître selon un exemple de mode de réalisation de l'invention.
**Fig. 2**
   [Fig. 2] illustre un ordinogramme d'un algorithme général pour la mise en œuvre d'un procédé de pilotage par un circuit de traitement maître, selon un exemple de mode de réalisation de l'invention.
**Fig. 3**

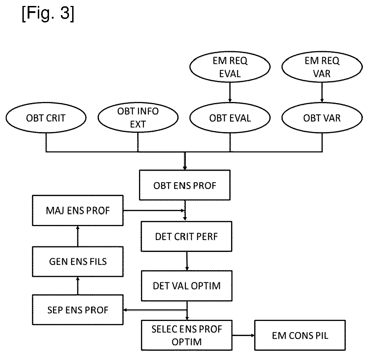

   [Fig. 3] illustre un ordinogramme d'un algorithme général pour la mise en œuvre d'un procédé de pilotage par un circuit de traitement maître, selon un mode particulier de réalisation de l'exemple en [Fig. 2].

### Description des modes de réalisation

L'invention concerne un procédé de pilotage.

Ce procédé est à la fois :
- générique car permettant de gérer n'importe quel objet pilotable,
- reconfigurable car le nombre et la nature des objets pilotés ne nécessite pas d'être connu a priori,
- polyvalent car poursuivant des objectifs variés,
- et intelligent car parvenant à optimiser conjointement ces objectifs.

La [Fig. 1] représente un mode de réalisation d'une installation électrique comprenant une pluralité d'équipements pilotables, notamment :
- un lave-vaisselle LV,
- un lave-linge LL,
- un sèche-linge SL,
- un chauffe-eau électrique CEJ de type chauffage à effet Joule,
- un chauffe-eau thermodynamique CET de type pompe à chaleur,
- et une batterie de stockage domestique BAT.

L'installation électrique peut également comprendre un ou plusieurs équipements électriques non pilotés (non représentés), par exemple un grille-pain, une télévision, un four à micro-ondes ou un aspirateur.

Les équipements précités peuvent être alimentés en électricité soit directement fournie par un fournisseur d'électricité, soit directement fournie par un module de production d'énergie renouvelable, par exemple un panneau solaire, rattaché à l'installation électrique, soit temporairement stockée puis fournie par la batterie de stockage domestique BAT.

Par « équipement pilotable », il est entendu un équipement dont le fonctionnement peut être piloté dans le temps.

Par exemple, la puissance de chauffage du chauffe-eau électrique CEJ peut être modulée dans le temps.

Par exemple, le sèche-linge SL peut être piloté pour mettre en œuvre un programme prédéfini de séchage de linge à partir d'un instant donné.

Le fonctionnement de chaque équipement électrique pilotable précité participe à au moins un besoin, typiquement assurer une disponibilité d'une ressource. Selon le cas, il est souhaitable que le besoin soit assuré soit de manière permanente, soit uniquement de manière ponctuelle.

Ainsi, les chauffe-eau CEJ et CET contribuent chacun par leur fonctionnement à assurer une disponibilité permanente d'eau chaude qui peut être consommée directement par un utilisateur ou consommée par un autre équipement tel que le lave-vaisselle.

Le fonctionnement de la batterie BAT permet d'assurer deux besoins :
- assurer une disponibilité permanente d'énergie stockée qui peut être consommée par les autres équipements,
- et absorber un surplus de production électrique par le module de production d'énergie renouvelable.

Le fonctionnement du lave-linge LL et du sèche-linge SL assurent les besoins respectifs de disposer de linge respectivement propre et sec de manière ponctuelle à l'issue d'un intervalle de temps donné.

Chaque équipement pilotable peut être piloté par la modification d'une valeur d'au moins une variable ajustable. Une telle valeur de variable ajustable peut par exemple :
- désigner une mise en marche ou un arrêt de l'équipement pilotable,
- ou désigner une sélection au cours du temps d'un mode de fonctionnement parmi plusieurs modes de fonctionnement de l'équipement pilotable, ces modes de fonctionnement différant les uns des autres par la puissance électrique consommée.

Les équipements pilotables sont pilotés par un circuit de traitement maître CTM qui peut comporter à titre d'exemple :
- une mémoire MEM pour stocker notamment les critères de performance, les scores associés à ces critères de performance, les variables ajustables et les données d'un programme informatique décrit ci-après ;
- un processeur PROC coopérant avec la mémoire MEM pour lire les données du programme et exécuter le procédé de pilotage ci-avant ;
- et une interface de communication COM pour émettre un signal de commande déterminé par le procédé de pilotage ci-avant et destiné à piloter les équipements précités.

Chaque équipement peut être piloté par le biais d'un pilote, ou driver, capable d'évaluer la contribution de l'appareil piloté aux différents critères de performance en fonction de la manière dont il est piloté.

Par pilote, ou driver, pour le pilotage d'un équipement est entendue une fonction logicielle qui peut être mise en œuvre par le circuit de traitement maître CTM pilotant l'ensemble des équipements ou par un circuit de traitement esclave CTE préexistant dédié au pilotage de l'équipement. Le circuit de traitement esclave CTE peut être intégré à l'équipement qu'il pilote. Le circuit de traitement esclave CTE peut alternativement être accessible par un réseau de communication local ou étendu, tel que représenté en [Fig. 1] pour le pilotage du chauffe-eau à effet Joule CEJ.

Plusieurs architectures de communication sont possibles :
- une architecture locale où les équipements communiquent par liaison radio avec le circuit de traitement maître CTM,
- ou une architecture dite en « cloud-to-cloud » où la communication entre le circuit de traitement maître CTM et les équipements pilotés se fait par l'intermédiaire de serveurs distants.

Ces architectures peuvent être utilisées simultanément selon les équipements pilotés, par exemple en [Fig. 1] une architecture en cloud-to-cloud étant utilisée pour mettre en liaison le circuit de traitement maître CTM avec un circuit de traitement esclave CTE dans le cadre du pilotage du chauffe-eau à effet Joule CEJ, les autres équipements communiquant par liaison radio avec le circuit de traitement maître CTM.

Au moins un circuit de traitement maître CTM peut être lié à et gérer un ou plusieurs drivers sans limitation de nombre. Chaque driver informe le circuit de traitement maître des options de pilotage disponibles. Le circuit de traitement maître CTM peut ensuite interroger les drivers pour connaître leur contribution aux scores de performance. Le circuit de traitement maître CTM réalise la synthèse des contributions des différents équipements.

L'évaluation de la contribution de chaque équipement aux valeurs de la pluralité de critères de performance peut se faire à l'aide de prévisions.

Par exemple, l'évaluation de la contribution d'un lave-linge à un critère de performance relatif à la consommation électrique totale de l'installation comprend typiquement une prévision de consommation électrique du lave-linge associée à un programme de lavage spécifique.

Par exemple, l'évaluation de la contribution d'un chauffe-eau à un critère de performance relatif à la disponibilité d'eau chaude peut comprendre une prévision d'un volume d'eau chaude disponible et/ou d'une température d'un volume prédéfini d'eau chaude associée à un fonctionnement du chauffe-eau pendant une durée déterminée.

Il en est de même pour la synthèse des contributions de tous les équipements : le circuit de traitement maître peut utiliser des prévisions (de consommation électrique par exemple) pour évaluer les performances de l'ensemble.

Les prévisions peuvent être réalisées à partir de données historiques des comportements passés : besoins, consommations, commandes, etc. ou par un autre moyen. Ces données historiques peuvent former une base de données accessible par le circuit de traitement maître. La base de données peut être par exemple stockée sur une mémoire du circuit de traitement maître ou stockée sur une mémoire d'un serveur distant.

Par exemple, il peut être prévu de piloter un lave-linge selon un programme déterminé, de mesurer la consommation électrique associée à ce programme, et de stocker dans une base de données la consommation électrique associée au programme et éventuellement au modèle du lave-linge. Cette consommation électrique peut ainsi être utilisée pour prévoir la consommation électrique ultérieure du même lave-linge, ou d'un autre lave-linge du même modèle, mettant en œuvre le même programme de lavage.

Le circuit de traitement maître CTM élabore une stratégie qui optimise conjointement les différents critères de performance, en utilisant pour cela une méthode d'optimisation multi-objectifs et multi-variables.

La [Fig. 2] représente un ordinogramme d'un algorithme général d'un programme informatique pour la mise en œuvre d'un procédé de pilotage, dans un mode de réalisation. Un tel algorithme général peut être appliqué dans le cas particulier de l'installation électrique représenté en [Fig. 1] pour piloter les équipements précités. La [Fig. 3] représente un mode particulier de réalisation de l'exemple représenté en [Fig. 2].

Le pilotage est effectué sur la base d'une optimisation multi-variable. Pour effectuer cette optimisation, différentes méthodes sont possibles. Il est possible de s'appuyer sur une métrique multi-objectif de type min-max ou basée sur un but à atteindre. Il est également possible de s'appuyer sur un algorithme d'optimisation de type simplexe, gradient conjugué, recuit simulé, etc. Un exemple de méthode d'optimisation multi-variable utilisant un algorithme évolutionnaire ou génétique est détaillé ci-après.

Le circuit de traitement maître CTM obtient OBT CRIT un ensemble de critères de performance. Ces critères peuvent notamment inclure :
- une consommation totale d'énergie,
- un confort d'un ou de plusieurs utilisateurs,
- une autoconsommation d'énergies renouvelables,
- un respect d'une puissance souscrite auprès d'un fournisseur d'énergie,
- un coût,
- un respect d'échéances de fonctionnement,
- une sécurité d'un ou de plusieurs utilisateurs,
- etc.

Chaque critère de performance est associé à au moins une fonction de coût individuelle, dont la valeur est indicative d'un degré d'optimisation du critère de performance. Typiquement, une valeur minimale d'une fonction de coût individuelle correspond à une optimisation maximale du critère de performance concerné.

Typiquement, le taux d'autoconsommation des énergies renouvelables peut être associé à une fonction de coût individuelle dont le résultat prend une valeur positive ou nulle, une valeur nulle du résultat correspondant à une optimisation parfaite du critère pris isolément, ici un taux d'autoconsommation égal à 100%.

Chaque fonction de coût individuelle est associée à un poids représentatif de l'importance relative ou hiérarchisation des critères de performance, la somme pondérée des fonctions de coût formant une fonction de coût globale dont la valeur du résultat est représentative de la qualité de l'optimisation conjointe des différents critères de performance, la meilleure optimisation correspondant à une valeur minimale.

Ainsi, la métrique multi-objectifs employée est une somme pondérée des différents scores ou valeurs des critères de performance.

Il est en outre possible qu'un critère de performance soit associée à plusieurs fonctions de coût individuelles de forme mathématique différente et pouvant avoir un poids différent.

Typiquement, le taux d'autoconsommation des énergies renouvelables peut être associé :
- à une première fonction de coût individuelle ayant une valeur minimale correspondant à un taux de 100% et croissant linéairement en fonction de la diminution du taux d'autoconsommation,
- et à une deuxième fonction de coût individuelle ayant un premier palier de valeur minimale correspondant à un taux entre 90% et 100% et un deuxième palier de valeur maximale correspondant à un taux entre 0 et 90%.

Un tel modèle est adapté pour le cas où la valeur de 90% de taux de charge est une limite minimale à ne pas dépasser.

Ainsi, suivant ce modèle, plus le taux d'autoconsommation est élevé, plus la somme pondérée de la première et de la deuxième fonctions de coût individuelles a une valeur basse. De plus, la deuxième fonction de coût individuelle crée un effet de seuil de sorte à imposer que le taux d'autoconsommation ait une valeur supérieure à 90%, et ce de manière d'autant plus marquée que le poids relatif de la deuxième fonction de coût individuelle est important par rapport à la première fonction de coût individuelle.

Parmi les critères de performance, au moins un premier critère de performance a une valeur corrélée à une projection d'un coût lié à une consommation ultérieure par l'installation électrique d'électricité fournie, et au moins un deuxième critère de performance a une valeur corrélée à une projection de satisfaction d'un besoin par un fonctionnement ultérieur d'au moins un équipement de l'installation électrique.

En outre, le circuit de traitement maître CTM peut obtenir OBT INFO EXT des informations extérieures issues par exemple d'un capteur en liaison radio avec le circuit de traitement maître et/ou issues par exemple d'un circuit de traitement distant CTD, par exemple accessible via un réseau de communication étendu. Typiquement, les informations extérieures sont des prévisions de profils temporels relatives par exemple à :
- un tarif prévu d'électricité fournie par un fournisseur d'électricité, par exemple une information tarifaire pour heures pleines, heures creuses et autres tarifs,
- un ensoleillement prévu pour l'électricité fournie par un panneau solaire rattaché à l'installation,
- une température extérieure,
- une utilisation prévue d'un équipement particulier,
- etc.

En outre, le circuit de traitement maître CTM obtient OBT VAR pour chaque équipement au moins une variable ajustable dans le temps pour le pilotage du fonctionnement de l'équipement, la variable agissant directement ou indirectement sur la puissance électrique consommée par l'équipement.

Par exemple, une variable ajustable pour le pilotage du lave-linge LL peut être la mise en marche ou l'arrêt du lave-linge LL.

Par exemple, une variable ajustable pour le pilotage d'un chauffe-eau peut être une consigne de température d'eau, le chauffe-eau pouvant disposer d'un module de régulation qui régule la puissance électrique pour atteindre la consigne de température.

Par exemple, une variable ajustable pour le pilotage de la batterie BAT peut être une consigne de charge.

L'obtention par le circuit de traitement maître CTM d'une variable ajustable pour le pilotage d'un équipement peut faire suite à une émission EM REQ VAR d'une requête du circuit de traitement maître CTM à destination d'un circuit de traitement esclave CTE configuré pour piloter cet équipement et disposant par nature de la variable ajustable et de sa valeur pour que le circuit de traitement esclave CTE communique la variable ajustable au circuit de traitement maître CTM.

En outre, le circuit de traitement maître CTM obtient OBT EVAL une évaluation des contributions des différents équipements auxdits critères de performance en fonction de la valeur de l'au moins une variable ajustable.

L'obtention par le circuit de traitement maître CTM d'une telle évaluation peut faire suite à une émission EM REQ EVAL d'une requête du circuit de traitement maître CTM à destination d'un circuit de traitement esclave CTE apte à déterminer la contribution de l'équipement piloté sur au moins une partie des critères de performance, notamment sur le ou les critères de performance associés à une consommation d'électricité par l'équipement, en fonction d'au moins une valeur possible de la variable ajustable, pour que le circuit de traitement esclave CTE communique cette contribution au circuit de traitement maître CTM.

Sur la base des critères de performance obtenus, des variables ajustables, de l'évaluation des contributions des différents équipements et le cas échéant des informations extérieures, le circuit de traitement maître optimise OPTIM les valeurs des variables ajustables en fonction du temps.

Une implémentation possible de l'optimisation OPTIM est décrite ci-après en référence à la [Fig. 3]. Bien entendu, d'autres approches alternatives permettant d'optimiser des valeurs des variables ajustables en fonction du temps sur la base des critères de performance obtenus, des variables ajustables, de l'évaluation des contributions des différents équipements et le cas échéant des informations extérieures sont possibles.

Le circuit de traitement maître CTM obtient OBT ENS PROF une pluralité d'ensembles de profils temporels. Chaque ensemble de profils temporels comprend pour chaque équipement de l'installation électrique un profil temporel de valeur de la ou des consignes de réglage pour le pilotage du fonctionnement dudit équipement. Chaque profil temporel peut être par exemple généré aléatoirement ou être issu d'une bibliothèque de profils utilisés pour une précédente optimisation du pilotage d'équipements de l'installation électrique ou d'une installation similaire, par exemple en ce que les mêmes équipements, ou catégories d'équipements, sont présents et/ou en ce que des critères de performance de même nature sont considérés.

Pour chaque ensemble de profils temporels, le circuit de traitement maître CTM détermine DET CRIT PERF une valeur des critères de performance associés audit ensemble de profils temporels, c'est-à-dire une valeur des critères de performance lorsque chaque variable ajustable a une valeur en fonction du temps égale audit profil temporel. En d'autres termes, pour chaque ensemble de profils temporels et pour chaque critère de performance, un score peut être établi afin de déterminer à quel point chaque ensemble de profils temporels respecte chaque critère de performance.

Pour chaque ensemble de profils temporels, le circuit de traitement maître CTM détermine et associe DET VAL OPTIM une valeur d'optimisation sur la base des scores ou valeurs de critères de performance déterminés. Une valeur d'optimisation est typiquement le résultat de la fonction de coût global pondérée définie ci-avant. Ainsi, plus la valeur d'optimisation est proche de zéro, meilleure est l'optimisation. Les valeurs d'optimisation permettent de comparer les ensembles de profils temporels entre eux et déterminer parmi la pluralité d'ensembles de profils temporels celui respectant au mieux les critères de performance.

Sur la base des valeurs d'optimisation le circuit de traitement maître CTM sélectionne SELEC ENS PROF OPTIM un ensemble de profils optimisé. Les valeurs d'optimisation associées aux ensembles de profils temporels sont comparées entre elles afin de déterminer l'ensemble de profils le plus optimisé.

Le circuit de traitement maître CTM sépare SEP ENS PROF la pluralité d'ensembles de profils en deux catégories en fonction des valeurs d'optimisation associées à chaque ensemble de profils.

Par exemple, en considérant que la pluralité d'ensembles de profils comprend n ensembles de profils, ceux-ci peuvent être classés en fonction de leur valeur d'optimisation associée de manière à identifier une première pluralité de p ensembles de profils ayant les meilleures valeurs d'optimisation, c'est-à-dire parvenant à optimiser de manière conjointe les valeurs des critères de performance de manière plus satisfaisante que chacun des autres ensembles de profils de la pluralité d'ensembles de profils. Ainsi, la pluralité d'ensembles de profils est séparée en la première pluralité de p ensembles de profils et une deuxième pluralité de n-p ensembles de profils.

Le circuit de traitement maître CTM génère GEN ENS FILS une pluralité d'ensembles fils sur la base de la première pluralité de p ensembles de profils.

Par exemple, un ensemble fils peut être généré par recombinaison de profils issus respectivement d'un premier et d'un deuxième ensemble de profils de la première pluralité de p ensembles de profils.

Alternativement, par exemple, un ensemble fils peut être généré à partir d'un ensemble initial de profils de la première pluralité de p ensembles de profils en effectuant un décalage dans le temps et/ou en amplitude d'au moins un profil de l'ensemble initial, le ou les autres profils de l'ensemble initial restant inchangés.

Par extension, une pluralité d'ensembles fils peut être généré sur la base de l'ensemble initial par incrémentation successive dudit décalage dans le temps et/ou en amplitude.

Le circuit de traitement maître CTM met à jour MAJ ENS PROF la pluralité d'ensembles de profils en remplaçant la deuxième pluralité de n-p ensembles de profils par les ensembles fils générés.

Le résultat typique de l'optimisation est un planning élaboré pour une période à venir, par exemple la fin de la journée en cours et le lendemain.

Le circuit de traitement maître CTM émet EM CONS PIL à destination de chaque équipement piloté une consigne de pilotage. Typiquement, les équipements pilotés se conforment au planning qui est mis à jour régulièrement en fonction des nouvelles informations disponibles. Entre deux mises à jour, le comportement des équipements peut être ajusté par un moteur temps réel afin de pouvoir réagir à des aléas.

## Revendications

1. Procédé de pilotage d'une pluralité d'équipements d'une installation électrique par un circuit de traitement maître, le procédé comprenant :
- une obtention, par le circuit de traitement maître, d'une pluralité de critères de performance,
∘ au moins un premier critère de performance ayant une valeur corrélée à une projection d'un coût lié à une consommation ultérieure par l'installation électrique d'électricité fournie,
∘ au moins un deuxième critère de performance ayant une valeur corrélée à une projection de satisfaction d'un besoin par un fonctionnement ultérieur d'au moins un équipement de l'installation électrique,
- une obtention, par le circuit de traitement maître, pour chaque équipement, d'au moins une variable ajustable associée audit équipement permettant d'ajuster une consommation électrique dudit équipement en fonction du temps;
- une obtention, par le circuit de traitement maître, pour chaque équipement, d'une évaluation d'une contribution respective dudit équipement aux valeurs de la pluralité de critères de performance en fonction d'une valeur au cours du temps de ladite au moins une variable ajustable associée audit équipement,
- une obtention, par le circuit de traitement maître, d'un ensemble optimisé de valeurs desdites variables ajustables en fonction du temps sur la base de l'évaluation des contributions respectives de chaque équipement aux valeurs de la pluralité de critères de performance,
- et un pilotage, par le circuit de traitement maître, de ladite pluralité d'équipements par une émission au cours du temps de consignes d'ajustement des valeurs desdites variables ajustables associées auxdits équipements sur la base dudit ensemble optimisé de valeurs desdites variables ajustables en fonction du temps.

2. Procédé selon la revendication 1, au moins un équipement étant piloté par un circuit de traitement esclave, le procédé comprenant en outre :
- une émission, par le circuit de traitement maître, d'une requête de variable ajustable destinée audit circuit de traitement esclave en vue de l'obtention, par le circuit de traitement maître, pour ledit équipement piloté par ledit circuit de traitement esclave, de ladite au moins une variable ajustable associée audit équipement permettant d'ajuster la consommation électrique dudit équipement en fonction du temps;
- une émission, par le circuit de traitement maître, d'une requête de contribution respective destinée à chaque circuit de traitement esclave en vue de l'obtention, par le circuit de traitement maître, pour ledit équipement piloté par ledit circuit de traitement esclave, de l'évaluation de la contribution respective dudit équipement aux valeurs de la pluralité de critères de performance en fonction de la valeur au cours du temps de ladite au moins une variable ajustable associée audit équipement.

3. Procédé selon la revendication 1, ledit circuit de traitement esclave étant intégré audit équipement.

4. Procédé selon l'une quelconque des revendications 2 ou 3, dans lequel :
- au moins un circuit de traitement esclave pilotant un équipement est configuré pour régler au cours du temps la valeur de ladite au moins une variable ajustable associée audit équipement selon une consigne de réglage prédéfinie ;
- et au moins une consigne d'ajustement émise par le circuit de traitement maître est destinée audit circuit de traitement esclave pour ajuster ladite consigne de réglage prédéfinie.

5. Procédé selon l'une quelconque des revendications précédentes, dans lequel :
- la valeur dudit deuxième critère de performance est corrélée à une projection de satisfaction d'un premier besoin par un fonctionnement ultérieur d'au moins un équipement de l'installation électrique ;
- et ladite pluralité de critères de performance comprend en outre au moins un troisième critère de performance ayant une valeur corrélée à une projection de satisfaction d'un deuxième besoin distinct du premier besoin par un fonctionnement ultérieur d'au moins un équipement de l'installation électrique.

6. Procédé selon l'une quelconque des revendications précédentes, dans lequel :
- au moins un critère de performance a une valeur associée à une première fonction de coût associée à un premier poids,
- et ladite valeur associée à une première fonction de coût est en outre associée à une deuxième fonction de coût associée à un deuxième poids inférieur au premier poids.

7. Procédé selon l'une quelconque des revendications précédentes, dans lequel l'évaluation de la contribution d'au moins un équipement à une valeur d'au moins un critère de performance en fonction d'une valeur au cours du temps de ladite au moins une variable ajustable est obtenue sur la base d'une valeur précédente du critère de performance associée à un pilotage identique ou similaire d'un équipement par le passé.

8. Procédé selon l'une quelconque des revendications précédentes, l'installation électrique comprenant en outre un module de production et/ou de stockage électrique apte à fournir une électricité produite et/ou stockée à la pluralité d'équipements de l'installation électrique, le procédé comprenant en outre :
- une obtention d'un profil de disponibilité de l'électricité produite et/ou stockée pouvant être fournie à l'installation électrique par le module de production ou de stockage électrique en fonction du temps,
- et au moins un critère de performance ayant une valeur corrélée en outre audit profil de disponibilité.

9. Procédé selon la revendication 8, dans lequel le module de production et/ou de stockage électrique comprend un panneau solaire et le profil de disponibilité est un profil d'ensoleillement.

10. Procédé selon l'une quelconque des revendications précédentes, la pluralité d'équipements comprenant un module de chauffage électrique apte à chauffer un fluide, dans lequel au moins un critère de performance a une valeur corrélée en outre à une température du fluide.

11. Procédé selon l'une quelconque des revendications précédentes, comprenant en outre une optimisation, par le circuit de traitement maître, des valeurs desdites variables ajustables en fonction du temps en vue d'obtenir l'ensemble optimisé de valeurs, l'optimisation comprenant une sélection d'un ensemble de profils optimisé parmi une pluralité de n ensembles (A₁, ..., Aᵢ, ..., Aₙ) de profils comprenant chacun un profil de valeur de chaque variable ajustable en fonction du temps.

12. Procédé selon la revendication 11, dans lequel :
- chaque critère de performance obtenu a respectivement une valeur associée à une fonction de coût, les fonctions de coût étant en outre respectivement associées à un poids différent de zéro de manière à former une fonction de coût globale pondérée,
- et l'optimisation des valeurs desdites variables ajustables en fonction du temps est en outre mis en œuvre sur la base de la fonction de coût globale pondérée.

13. Procédé selon la revendication 12, ladite sélection comprenant une obtention de la pluralité de n ensembles (A₁, ..., Aᵢ, ..., Aₙ) de profils, et ladite sélection comprenant en outre, pour chaque ensemble (A₁, ..., Aᵢ, ..., Aₙ) de profils, une répétition de :
- une détermination des valeurs des critères de performance associés audit ensemble de profils lorsque chaque variable ajustable a une valeur en fonction du temps égale audit profil de valeur,
- une détermination d'une valeur d'optimisation (C₁, ..., Cᵢ, ..., Cₙ) associée audit ensemble de profils, la valeur d'optimisation correspondant à un résultat de la fonction de coût globale appliquée auxdites valeurs des critères de performance,
- et une sélection d'un ensemble de profils optimisé sur la base desdits ensembles de profils et des valeurs d'optimisation associées auxdits ensembles de profils..

14. Circuit de traitement maître comprenant un processeur connecté à une mémoire et à au moins une interface de communication avec une pluralité d'équipements d'une installation électrique, le circuit de traitement étant configuré pour réaliser les étapes d'un procédé de pilotage selon l'une des revendications 1 à 13.

15. Installation électrique comportant une pluralité d'équipements et un circuit de traitement selon la revendication 14.

16. Programme informatique comportant des instructions pour la mise en œuvre du procédé de pilotage selon l'une des revendications 1 à 13, lorsque lesdites instructions sont exécutées par un processeur d'un circuit de traitement.

17. Support non-transitoire de stockage de données, lisible par ordinateur, comprenant au moins une séquence d'instructions amenant un ordinateur à exécuter un programme exécutant les étapes d'un procédé de pilotage selon l'une des revendications 1 à 13.
